# EUROPEAN PATENT SPECIFICATION

(11) **EP 2 813 963 B1**
(45) Date of publication and mention of the grant of the patent: **05.07.2017**
(21) Application number: 13746977.1
(22) Date of filing: 29.01.2013
(51) Int. Cl.: G06F 21/35, B60R 25/01, B60R 25/10, E05B 49/00, G06F 21/31, G06K 17/00, G06K 19/07, G06K 19/10, H04M 1/00

(54) **INFORMATION PROCESSING SYSTEM**
INFORMATIONSVERARBEITUNGSSYSTEM
SYSTÈME DE TRAITEMENT D'INFORMATIONS

(30) Priority: 09.02.2012 JP 2012026629
(43) Date of publication of application: 17.12.2014
(73) Proprietor: NEC Solution Innovators, Ltd., Tokyo 136-8627 (JP)
(72) Inventor: SAITO, Teruo, Koto-ku, Tokyo 136-8627 (JP)
(74) Representative: Robson, Aidan John
(86) International application number: PCT/JP2013/000442
(87) International publication number: WO 2013/118454

(56) References cited:
- EP-A1- 2 601 082
- EP-A2- 2 514 643
- JP-A- 2005 163 522
- JP-A- 2006 044 491
- JP-A- 2006 118 886
- JP-A- 2008 002 140
- JP-A- 2011 052 412

## Description

### TECHNICAL FIELD

The present invention relates to information processing systems. More specifically, the present invention relates to an information processing system authenticating a mobile wireless device carried by a user.

### BACKGROUND OF THE INVENTION

It is known that a mobile wireless device carried by a user, in response to a request by a wireless authentication device, transmits authentication information for determination whether the mobile wireless device and the wireless authentication device are associated with each other or not, and the wireless authentication device, based on the authentication information transmitted thereto, performs authentication in which it is determined whether the mobile wireless device and the wireless authentication device are associated with each other or not. For example, the abovementioned technique is applied to a system unlocking the door of an automobile, and the system thereby unlocks the door when authentication succeeds.

According to the abovementioned technique, when the distance between a mobile wireless device and a wireless authentication device is sufficiently short, namely when a mobile wireless device and a wireless authentication device are located in positions where the devices are able to communicate with each other, the mobile wireless device automatically transmits authentication information in response to an authentication information request being transmitted by the wireless authentication device and representing a request for authentication information, and the wireless authentication device performs authentication based on the authentication information.

On the other hand, when the distance between a mobile wireless device and a wireless authentication device is sufficiently long, namely when a mobile wireless device and a wireless authentication device are located in positions where the devices are not able to communicate with each other, the mobile wireless device cannot receive an authentication information request. Consequently, authentication information is not transmitted from the mobile wireless device and authentication is not performed.

However, according to the abovementioned technique, there is a risk that authentication is performed when a third party relays communication between a mobile wireless device and a wireless authentication device, namely when a relay attack is performed (e.g., see Japanese Unexamined Patent Application Publication No. 2010-185186). Referring to Fig. 1, a relay attack will be described.

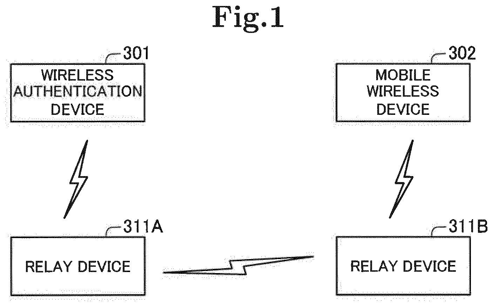

A relay attack is performed by using a relay device 311A close to a wireless authentication device 301 and a relay device 311 B close to a mobile wireless device 302 as shown in Fig. 1. For example, when the relay device 311A, instead of the mobile wireless device 302, transmits a command instructing to unlock the door to the wireless authentication device 301, the wireless authentication device 301 transmits an authentication information request.

The relay device 311A receives the transmitted authentication information request and transmits the request to the relay device 311B. Then, the relay device 311B transmits the authentication information request received thereby to the mobile wireless device 302.

Upon receiving the authentication information request, the mobile wireless device 302 automatically transmits authentication information. The relay device 311 B receives the transmitted authentication information and transmits the information to the relay device 311A. Then, the relay device 311A transmits the authentication information received thereby to the wireless authentication device 301.

Thus, even when a mobile wireless device and a wireless authentication device are located in positions where the devices are not able to communicate with each other, a relay attack enables communication between the mobile wireless device and the wireless authentication device. Therefore, there is a problem that authentication is performed even when the distance between a mobile wireless device and a wireless authentication device is sufficiently long.

Accordingly, we have appreciated that it would be desirable to provide an information processing system capable of solving the abovementioned problem that authentication is performed even when the distance between a mobile wireless device and a wireless authentication device is sufficiently long.

JP2005 163 522 A discloses further prior art.

### SUMMARY OF THE INVENTION

In order to achieve the abovementioned object, an information processing system as an aspect of the present invention is an information processing system according to claim 1. Further, an information processing method as another aspect of the present invention is an information processing method according to claim 6. Configured as described above, the present invention exerts an advantageous effect that it is possible to prevent that authentication is performed when the distance between a mobile wireless device and a wireless authentication device is sufficiently long.

### BRIEF DESCRIPTION OF THE DRAWINGS

Fig. 1 is a diagram for describing the overview of a relay attack;
Fig. 2 is a block diagram schematically showing the configuration of an information processing system according to a first exemplary embodiment of the present invention;
Fig. 3 is a flowchart showing an operation of the information processing system according to the present invention;
Fig. 4 is a diagram for describing the operation of the information processing system according to the present invention;
Fig. 5 is a flowchart showing an operation of the information processing system according to the present invention;
Fig. 6 is a diagram for describing the operation of the information processing system according to the present invention;
Fig. 7 is a block diagram schematically showing the configuration of an information processing system according to a second exemplary embodiment of the present invention;
Fig. 8 is a flowchart showing an operation of the information processing system according to the present invention;
Fig. 9 is a block diagram schematically showing the configuration of an information processing system according to a third exemplary embodiment of the present invention;
Fig. 10 is a flowchart showing an operation of the information processing system according to the present invention; and
Fig. 11 is a flowchart showing the operation of the information processing system according to the present invention.

### DETAILED DESCRIPTION OF EXAMPLE EMBODIMENTS

### <First Exemplary Embodiment>

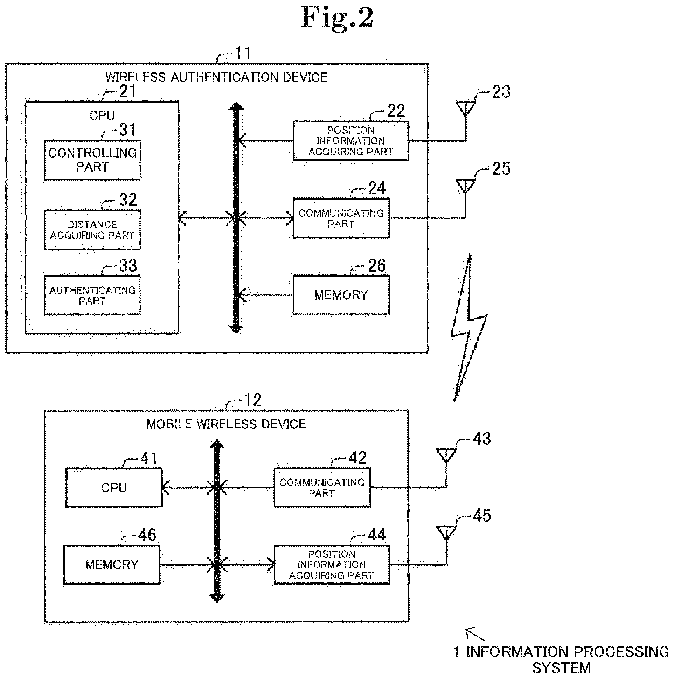

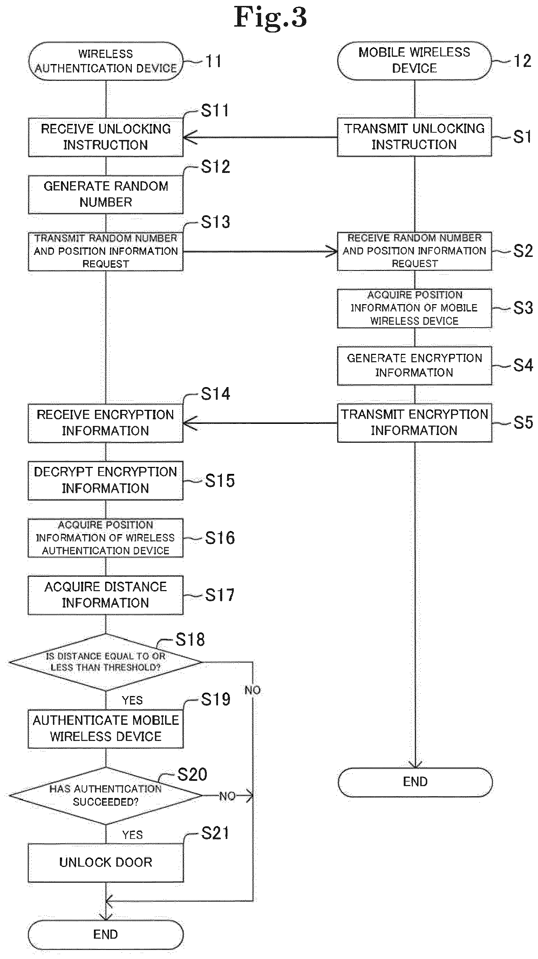

A first exemplary embodiment of the present invention will be described referring to Figs. 2 to 6. Fig. 2 is a diagram for describing the configuration of an information processing system 1. Figs. 3 to 6 are diagrams for describing operations of the information processing system 1.

### [Configuration]

Fig. 2 is a block diagram showing the configuration of the information processing system 1 according ton the first exemplary embodiment. As shown in Fig. 2, the information processing system 1 includes a wireless authentication device 11 and a mobile wireless device 12. The wireless authentication device 11 is set up in, for example, an object used by a user. The mobile wireless device 12 is embedded in, for example, a key (e.g., a smart key™), a cell phone or the like carried by a user. For example, the wireless authentication device 11 is set up in a vehicle of an object used by a user, and functions as a door lock control device that locks and unlocks the door of the vehicle. The mobile wireless device 12 functions as a key for locking and unlocking the door of the vehicle.

First, the configuration of the wireless authentication device 11 will be described. The wireless authentication device 11 includes a CPU (Central Processing Unit) 21, a position information acquiring part 22, a position information acquisition antenna 23, a communicating part 24, a communication antenna 25, and a memory 26.

The CPU 21 reads out a program stored in the memory 26 to a RAM (Random Access Memory) (not shown in the drawings) to execute various kinds of processes (e.g., processes by the position information acquiring part 22 and by the communicating part 24).

The CPU 21 includes function blocks of a controlling part 31, a distance acquiring part 32 and an authenticating part 33. The respective blocks included by the CPU 21 are configured to be capable of mutually transmitting/receiving signals and data when necessary.

The controlling part 31 generates a random number for determining whether the mobile wireless device 12 is associated with the wireless authentication device 11 or not. Then, the communicating part 24 transmits the generated random number and a position information request that is a request for position information representing the position of the mobile wireless device 12, to the mobile wireless device 12 via the communication antenna 25. Moreover, the communicating part 24 receives encryption information in which the random number and the position information representing the current position of the mobile wireless device 12 are encrypted, from the mobile wireless device 12 to be described later via the communication antenna 25.

Then, the controlling part 31 decrypts the received encryption information based on decryption information that is previously stored in the memory 26 and is for decrypting encryption information. The decryption information is, for example, a private key associated with a public key owned by the mobile wireless device 12.

The position information acquiring part 22 acquires position information representing the current position of the wireless authentication device 11 via the position information acquisition antenna 23. The position information acquiring part 22 acquires position information by using a system, such as a GPS (Global Positioning System), which measures a position.

Subsequently, the distance acquiring part 32 acquires the distance between the wireless authentication device 11 and the mobile wireless device 12 based on the position information of the wireless authentication device 11 acquired by the position information acquiring part 22 and the position information of the mobile wireless device 12 decrypted by the controlling part 31. Meanwhile, the distance acquiring part 32 can also be configured to acquire the distance between the wireless authentication device 11 and the mobile wireless device 12 by using radar or the like instead of using position information. This is true for other configurations to be described below.

Then, the controlling part 31 determines whether the distance acquired by the distance acquiring part 32 is equal to or less than a preset threshold. When it is determined that the acquired distance is equal to or less than the threshold, the authenticating part 33 performs authentication in which it is determined whether the random number generated by the controlling part 31 and the random number contained in the encryption information decrypted by the controlling part 31 agree with each other or not.

In other words, the authenticating part 33 determines whether the random number generated by the wireless authentication device 11 and the random number encrypted by using the public key by the mobile wireless device 12 and decrypted by using the private key by the wireless authentication device 11 agree with each other or not, thereby determining whether the wireless authentication device 11 and the mobile wireless device 12 are associated with each other or not.

When the authenticating part 33 determines that the generated random number and the decrypted random number agree with each other, namely when the authenticating part 33 determines that authentication succeeds, the controlling part 31 unlocks the door of a vehicle, for example. Further, the controlling part 31 is capable of controlling locking and unlocking of, not only the door of a vehicle, but also the door of a house, the door of an object used by a user, and so on.

Next, the configuration of the mobile wireless device 12 will be described. The mobile wireless device 12 includes a CPU 41, a communicating part 42, a communication antenna 43, a position information acquiring part 44, a position information acquisition antenna 45, and a memory 46. The CPU 41 reads out a program stored in the memory 46 to a RAM (not shown in the drawings) to execute various kinds of processes (e.g., processes by the communicating part 42 and the position information acquiring part 44).

The communicating part 42 receives a random number and a position information acquisition request that have been transmitted from the wireless authentication device 11 via the communication antenna 43. Moreover, the communicating part 42 transmits encryption information generated by the CPU 41 to the wireless authentication device 11.

The position information acquiring part 44 acquires position information representing the current position of the mobile wireless device 12 via the position information acquisition antenna 45. The position information acquiring part 44 has the same configuration as the position information acquiring part 22 described above.

The CPU 41 generates encryption information in which the random number received by the communicating part 42 and the position information acquired by the position information acquiring part 44 are encrypted by using a public key previously stored in the memory 46, for example. The public key stored in the memory 46 is associated with the private key stored in the memory 26 of the wireless authentication device 11.

### [Operation]

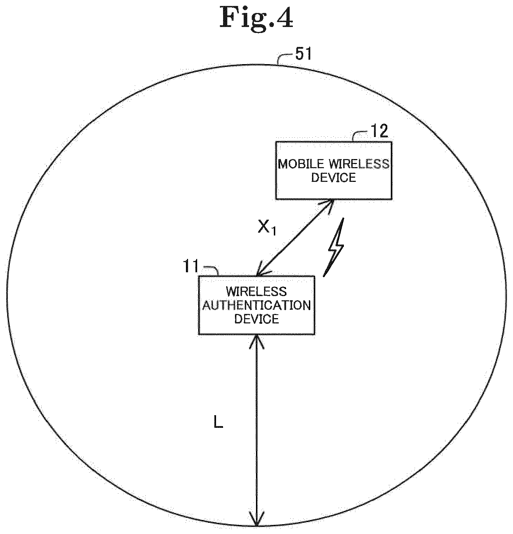

Next, referring to Figs. 3 to 6, the operations of the abovementioned information processing system 1 will be described in detail. First, referring to Figs. 3 and 4, an example of a case where a relay attack is not performed will be described. Fig. 3 is a flowchart showing the operation of the information processing system 1. Fig. 4 is a diagram for describing the operation of the information processing system 1.

A process by the information processing system 1 shown in Fig. 3 is started when a user carrying (having) the mobile wireless device 12 enters a range where communication with the wireless authentication device 11 is possible (e.g., a communication range 51 shown in Fig. 4) or when the user performs a predetermined operation (e.g., an operation of pushing down a button) within a range where communication between the wireless authentication device 11 and the mobile wireless device 12 is possible. In the example shown in Fig. 3, a description will be made assuming that the door of a vehicle of an object is locked. Likewise, in another example to be described later, a description will be made assuming that the door of a vehicle of an object is locked.

First, at step S1, the communicating part 42 of the mobile wireless device 12 transmits an unlocking instruction to unlock the door of the vehicle to the wireless authentication device 11.

Then, at step S11, the communicating part 24 of the wireless authentication device 11 receives the unlocking instruction transmitted at step S1 by the mobile wireless device 12. When the unlocking instruction is received, the controlling part 31 generates a random number at step S12. This random number is used for performing authentication to determine whether the mobile wireless device 12 is associated with the wireless authentication device 11 or not.

Subsequently, at step S13, the communicating part 24 transmits the random number generated at step S12 and a position information request to the mobile wireless device 12. A position information request is information on a request for position information representing the position of the mobile wireless device 12. Further, while transmitting the random number, the communicating part 24 transmits an authentication information request representing a request for authentication information to the mobile wireless device 12. This is true for other configurations to be described later.

Then, at step S2, the communicating part 42 of the mobile wireless device 12 receives the random number and the position information request that have been transmitted thereto at step S13. When the position information request is received, the position information acquiring part 44 of the mobile wireless device 12 acquires position information representing the position of the mobile wireless device 12 at step S3.

Then, at step S4, the CPU 41 of the mobile wireless device 12 generates encryption information that the random number received at step S2 and the position information of the mobile wireless device 12 acquired at step S3 are encrypted by using a public key previously stored in the memory 46. Meanwhile, it is also possible to individually generate authentication information in which the random number is encrypted and encryption position information in which the position information is encrypted.

Further, in a case where identification information (authentication information) unique to the mobile wireless device 12 is previously stored in the memory 46, the CPU 41 can generate encryption information by encrypting the identification information instead of the random number, and transmit the encryption information. In this case, the authenticating part 33 determines whether the unique identification information transmitted by the mobile wireless device 12 and identification information previously stored in the wireless authentication device 11 agree with each other or not, thereby determining whether the wireless authentication device 11 and the mobile wireless device 12 are associated with each other or not. Meanwhile, the mobile wireless device 12 can transmit the unique identification information without encrypting.

Subsequently, at step S5, the communicating part 42 of the mobile wireless device 12 transmits the encryption information generated at step S4, to the wireless authentication device 11.

At step S14, the communicating part 24 of the wireless authentication device 11 receives the encryption information transmitted thereto at step S5. Subsequently, at step S15, the controlling part 31 of the wireless authentication device 11 decrypts the encryption information received at step S14 by using a private key previously stored in the memory 26.

Further, at step S16, the position information acquiring part 22 of the wireless authentication device 11 acquires position information of the wireless authentication device 11. Then, at step S17, the distance acquiring part 32 of the wireless authentication device 11 acquires distance information representing the distance between the wireless authentication device 11 and the mobile wireless device 12, based on the position information of the mobile wireless device 12 contained in the encryption information decrypted at step S15 and the position information of the wireless authentication device11 acquired at step S16.

Subsequently, at step S18, the CPU 21 of the wireless authentication device 11 determines whether the distance represented by the distance information acquired at step S17 is equal to or less than a preset threshold. For example, the threshold is set to a communication distance L that communication between the wireless authentication device 11 and the mobile wireless device 12 is possible as shown in Fig. 4.

To be specific, as shown in Fig. 4, a distance X₁ between the wireless authentication device 11 and the mobile wireless device 12 is shorter than the communication distance L of the wireless authentication device 11, it is determined at step S18 that the distance is equal to or less than the threshold (step S18: Yes). Then, at step S19, the authenticating part 33 of the wireless authentication device 11 authenticates the mobile wireless device 12. That is, the authenticating part 33 performs authentication in which it is determined that the random number generated at step S12 and the random number decrypted at step S15 agree with each other or not.

Then, at step S20, the authenticating part 33 of the wireless authentication device 11 determines whether the authentication has succeeded. That is, the authenticating part 33 determines whether the random number generated at step S12 and the random number decrypted at step S15 agree with each other. In a case where the authenticating part 33 determines that the authentication has succeeded (step S20: Yes), the CPU 21 of the wireless authentication device 11 unlocks the door of the vehicle at step S21.

After step S21, when the CPU 41 determines No at step S18, and when the authenticating part 33 determines No at step S20, the operation by the information processing system 1 ends.

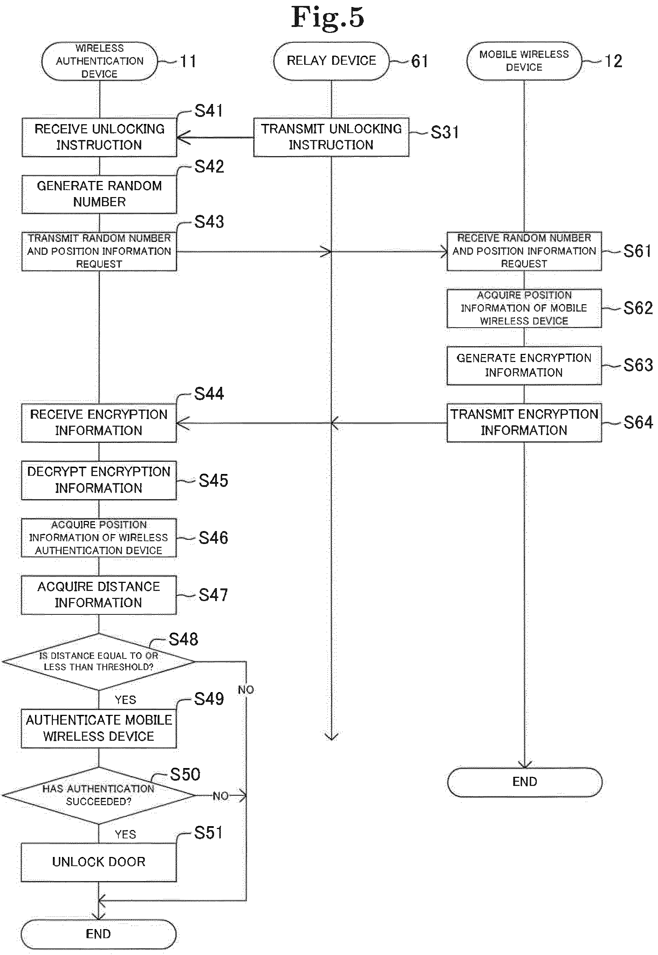

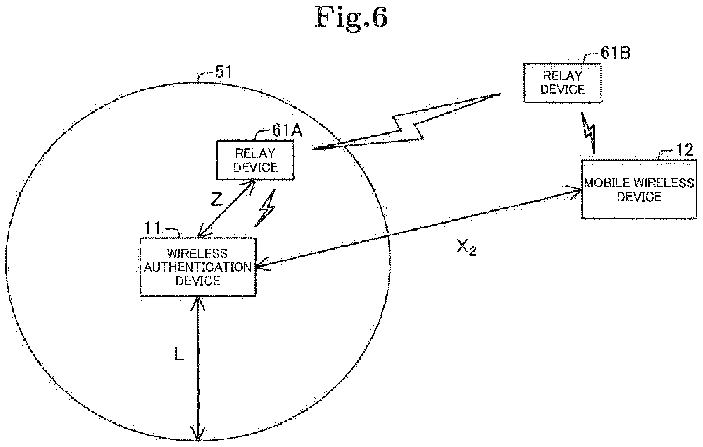

Next, referring to Figs. 5 and 6, an example of a case where a relay attack is performed will be described. Fig. 5 is a flowchart showing the operation of the information processing system 1 when a relay attack is performed. Fig. 6 is a diagram for describing the operation of the information processing system 1.

Because steps S41 to S51 in Fig. 5 are equivalent to steps S11 to S21 in Fig. 3, and steps S61 to S64 in Fig. 5 are equivalent to steps S2 to S5 in Fig. 2, a detailed description thereof will be omitted.

A process shown in Fig. 5 is started when a relay device 61 performs a predetermined operation (e.g., an operation of pushing down a button) within a communication range 51 of the wireless authentication device 11. As shown in Fig. 6, the relay device 61 includes a relay device 61A close to the wireless authentication device 11 and a relay device 61 B close to the mobile wireless device 12, but the relay device 61A and the relay device 61 B will be collectively referred to as the relay device 61 for ease of description.

First, at step S31, the relay device 61 transmits an unlocking instruction to the wireless authentication device 11. To be specific, as shown in Fig. 6, the relay device 61A located within the communication range 51 of the wireless authentication device 11 transmits an unlocking instruction to the wireless authentication device 11. Step S31 is equivalent to step S1 in Fig. 2.

Then, at step S41, the communicating part 24 of the wireless authentication device 11 receives the unlocking instruction transmitted at step S31 by the relay device 61. When the unlocking instruction is received, the controlling part 31 generates a random number at step S42. Subsequently, at step S43, the communicating part 24 transmits the random number generated at step S42 and a position information request to the mobile wireless device 12. In this transmission, the relay device 61 relays the random number and the position information request that have been transmitted by the wireless authentication device 11, and transmits them to the mobile wireless device 12 located at a sufficiently long distance from the wireless authentication device 11.

Then, at step S61, the communicating part 42 of the mobile wireless device 12 receives the random number and the position information request that have been transmitted at step S13 and relayed by the relay device 61. After the random number and the position information request are received, the position information acquiring part 44 of the mobile wireless device 12 acquires position information of the mobile wireless device 12 at step S62.

Then, at step S63, the CPU 41 of the mobile wireless device 12 generates encryption information that the random number received at step S61 and the position information acquired at step S62 are encrypted by using a public key previously stored in the memory 46. Subsequently, at step S64, the communicating part 42 of the mobile wireless device 12 transmits the encryption information generated at step S63 to the wireless authentication device 11. In this transmission, the relay device 61 relays the encryption information transmitted by the mobile wireless device 12, and transmits it to the wireless authentication device 11.

At step S44, the communicating part 24 of the wireless authentication device 11 receives the encryption information transmitted at step S64 and relayed by the relay device 61. Subsequently, at step S45, the controlling part 31 of the wireless authentication device 11 decrypts the encryption information received at step S44.

Subsequently, at step S46, the position information acquiring part 22 of the wireless authentication device 11 acquires position information of the wireless authentication device 11. Then, at step S47, the distance acquiring part 32 of the wireless authentication device 11 acquires distance information based on the position information of the mobile wireless device 12 contained in the encryption information decrypted at step S45 and the position information of the wireless authentication device 11 acquired at step S46.

Subsequently, at step S48, the controlling part 31 of the wireless authentication device 11 determines whether the distance represented by the distance information acquired at step S47 is equal to or less than the threshold. That is, the controlling part 31 determines whether the mobile wireless device 12 and the wireless authentication device 11 are close to each other.

As shown in Fig. 6, a distance X₂ represented by the distance information is a value exceeding the communication distance (threshold) L. Therefore, it is determined at step S48 that the distance is not equal to or less than the threshold. Consequently, in a case where a relay attack is performed, steps S49 to S51 are omitted and the process by the information processing system 1 ends.

Thus, when the distance between the wireless authentication device 11 and the mobile wireless device 12 is acquired and the acquired distance exceeds a preset threshold, authentication (steps S49 and S50) is not performed. Therefore, it is possible to prevent that authentication is performed in a relay attack when the distance between a mobile wireless device and a wireless authentication device is sufficiently long.

Furthermore, the information processing system 1 can periodically execute steps S12 to S18 and steps S2 to S5 also when the door is unlocked at step S21 in Fig. 3 and, for example, the engine of the vehicle is running (a user is driving the vehicle).

Then, according to the invention the system is configured to cause the controlling part 31 to lock the door when it is determined at step S18 as a result of periodic execution of the abovementioned process that the distance is not equal to or less than the threshold (step S18: No), that is, when the distance between the wireless authentication device 11 and the mobile wireless device 12 is sufficiently long.

By periodically repeating the abovementioned process while the engine of the vehicle is running, even if a relay attack succeeds, the door of the vehicle is automatically locked when the distance between the wireless authentication device 11 and the mobile wireless device 12 becomes long. Therefore, by making it impossible to unlock the door from the inside of the vehicle, it is possible to confine an attacker having performed the relay attack in the vehicle.

Furthermore, it is also possible to notify an electronic device held by the user, a predetermined device or the like that the door is locked, in addition to locking the door. By notifying the door is locked, it is possible to make security against relay attacks higher.

In the case of periodically executing the abovementioned process, it is also possible to make a threshold to be used at step S18 different from the threshold used at step S18 before the door is unlocked. For example, because it is supposed that the user gets in the vehicle (i.e., the distance between the wireless authentication device 11 and the mobile wireless device 12 is sufficiently short) after the door is unlocked, it is favorable to set a value smaller than the communication distance L of the wireless authentication device 11 as a new threshold. This is true for other exemplary embodiments to be described later.

### <Second Exemplary Embodiment>

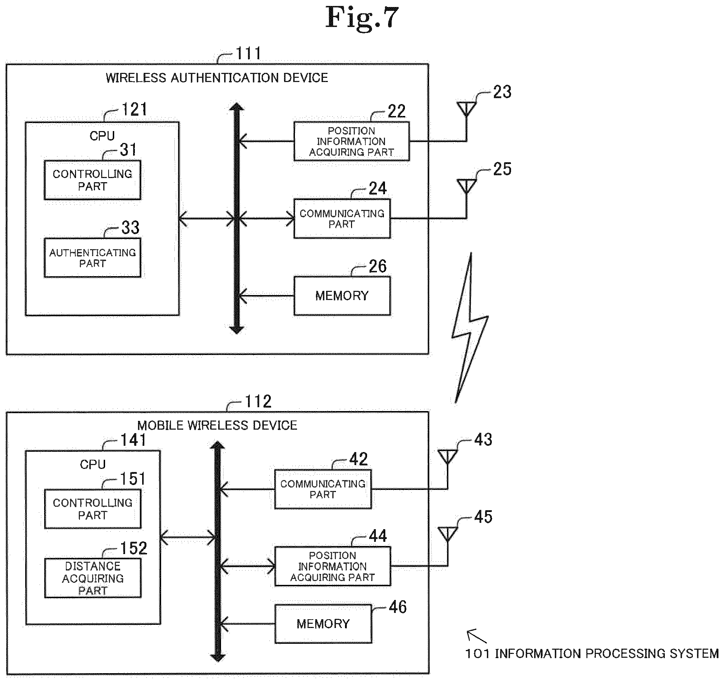

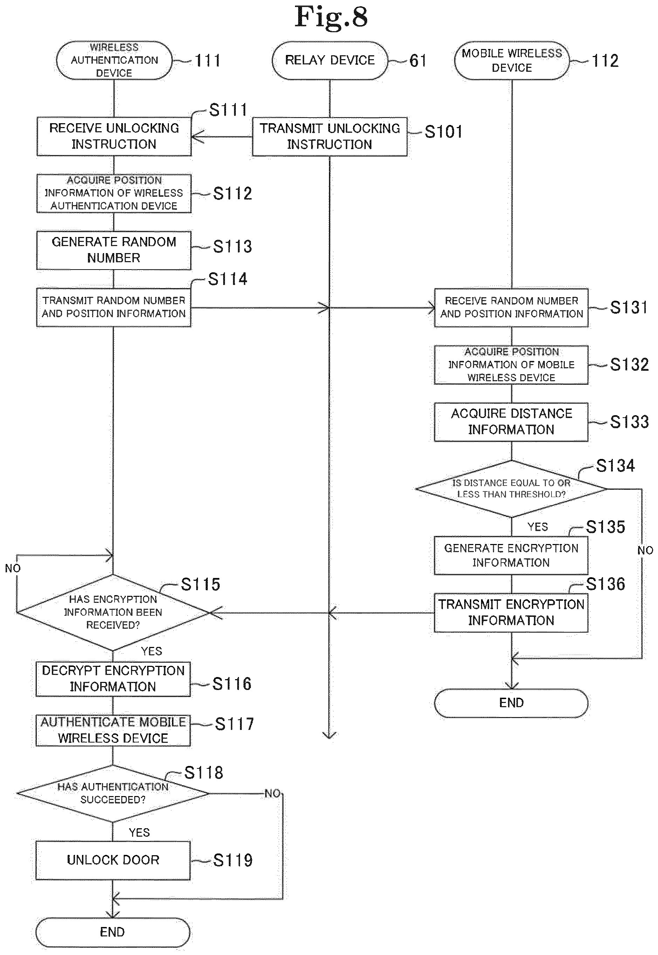

Next, a second exemplary embodiment of the present invention will be described referring to Figs. 7 and 8. Fig. 7 is a diagram for describing the configuration of an information processing system 101. Fig. 8 is a diagram for describing the operation of the information processing system 101.

### [Configuration]

In the information processing system 101 shown in Fig. 7, corresponding elements to those of the information processing system 1 shown in Fig. 2 are denoted by the same reference numerals. That is, the information processing system 101 is different from the information processing system 1 in that a wireless authentication device 111 does not have the distance acquiring part 32 and a CPU 141 of a mobile wireless device 112 has a controlling part 151 and a distance acquiring part 152. The information processing system 101 is the same as the information processing system 1 in the rest of the configuration. Therefore, the configuration of the CPU 141 of the information processing system 101 will be described.

The CPU 141 shown in Fig. 7 includes function blocks of the controlling part 151 and the distance acquiring part 152. The respective blocks of the CPU 141 are configured to be able to transmit and receive signals and data with each other when necessary.

### [Operation]

Next, referring to Fig. 8, the operation of the abovementioned information processing system 101 will be described in detail. The operation of the information processing system 101 shown in Fig. 8 is an operation when a relay attack is performed.

Because steps S111 to S113, S116 to S119 and S132 in Fig. 8 are equivalent to steps S11, S16, S12, S15, S19 to S21 and S3 in Fig. 8, and step S101 in Fig. 8 is equivalent to step S31 in Fig. 5, a detailed description thereof will be omitted.

First, at step S101, the relay device 61 transmits an unlocking instruction to the wireless authentication device 111.

Then, at step S111, the communicating part 24 of the wireless authentication device 111 receives the unlocking instruction transmitted at step S101 by the relay device 61. When the unlocking instruction is received, the position information acquiring part 22 of the wireless authentication device 111 acquires position information of the wireless authentication device 11 at step S112. Subsequently, at step S113, the controlling part 31 generates a random number. Then, at step S114, the communicating part 24 transmits the position information acquired at step S112 and the random number generated at step S113 to the mobile wireless device 112.

Then, at step S131, the communicating part 42 of the mobile wireless device 112 receives the random number and the position information that have been transmitted at step S114 and relayed by the relay device 61. After the random number and the position information are received, the position information acquiring part 44 of the mobile wireless device 112 acquires position information of the mobile wireless device 112 at step S132.

Then, at step S133, the distance acquiring part 152 of the mobile wireless device 112 acquires distance information representing the distance between the wireless authentication device 111 and the mobile wireless device 112, based on the position information of the wireless authentication device 111 received at step S131 and the position information of the mobile wireless device 112 acquired at step S132.

Subsequently, at step S134, the controlling part 151 of the mobile wireless device 112 determines whether the distance represented by the distance information acquired at step S133 is equal to or less than a preset threshold. That is, the controlling part 151 determines whether the mobile wireless device 112 and the wireless authentication device 111 are close to each other.

In the case of determining at step S134 that the distance is equal to or less than the threshold (step S134: Yes), the controlling part 151 of the mobile wireless device 112 generates, at step S135, encryption information (authentication information) that the random number received at step S131 is encrypted by using a public key previously stored in the memory 46. Subsequently, at step S136, the communicating part 42 of the mobile wireless device 112 transmits the encryption information generated at step S135 to the wireless authentication device 111.

At step S115, the communicating part 24 of the wireless authentication device 111 determines whether the encryption information transmitted at step S136 and relayed by the relay device 61 has been received. In the case of determining that the encryption information has not been received yet (step S115: No), the communicating part 24 repeats step S115.

On the other hand, in a case where it is determined at step S115 that the encryption information has been received (step S115: Yes), the controlling part 31 of the wireless authentication device 111 decodes the encryption information received at step S115.

Then, the authenticating part 33 of the wireless authentication device 111 authenticates the mobile wireless device 112 at step S117. Subsequently, at step S118, the authenticating part 33 of the wireless authentication device 111 determines whether authentication has succeeded. When it is determined at step S118 that authentication has succeeded (step S118: Yes), the controlling part 31 of the wireless authentication device 111 unlocks the door of the vehicle at step S119.

After step S119, and when the authenticating part 33 determines No at step S18, the process by the information processing system 101 ends. Moreover, when the controlling part 151 determines No at step S134, steps S135, S136, and S115 to S119 are omitted, and then the process by the information processing system 101 ends.

Thus, the mobile wireless device 112 acquires the distance between the wireless authentication device 111 and the mobile wireless device 112, and determines whether the acquired distance is equal to or less than the threshold or not. Consequently, because the mobile wireless device 112 does not transmit encryption information (authentication information) to the wireless authentication device 111 when the acquired distance exceeds the threshold, it is possible to increase communication efficiency, and it is also possible to increase security.

Furthermore, also when the door is unlocked at step S119 in Fig. 8 and, for example, the engine of the vehicle is running, the information processing system 101 can periodically execute steps S112 to S114, S131, and S134.

When the system periodically executes the abovementioned process and determines at step S134 that the distance is not equal to or less than the threshold (step S134: No), namely when the distance between the wireless authentication device 111 and the mobile wireless device 112 is sufficiently long, the system can notify the user that the system is subjected to a relay attack, through an outputting part (not shown in the drawings) outputting a preset light or sound.

### <Third Exemplary Embodiment>

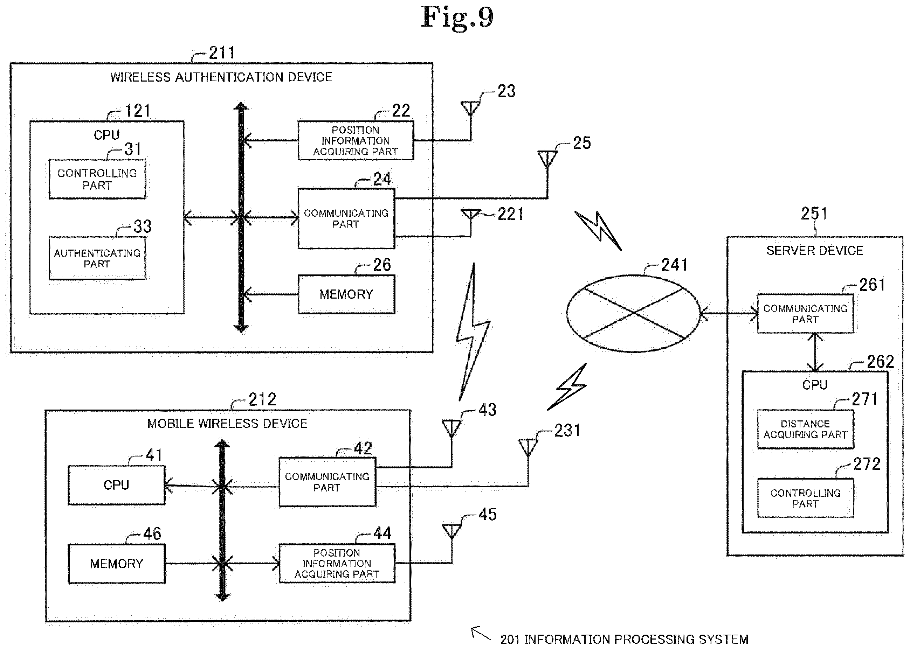

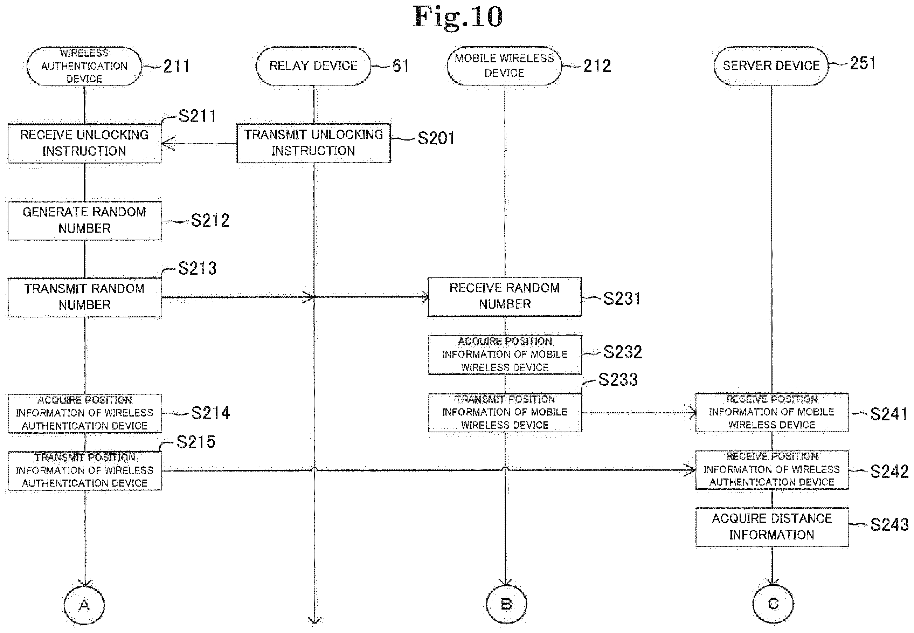

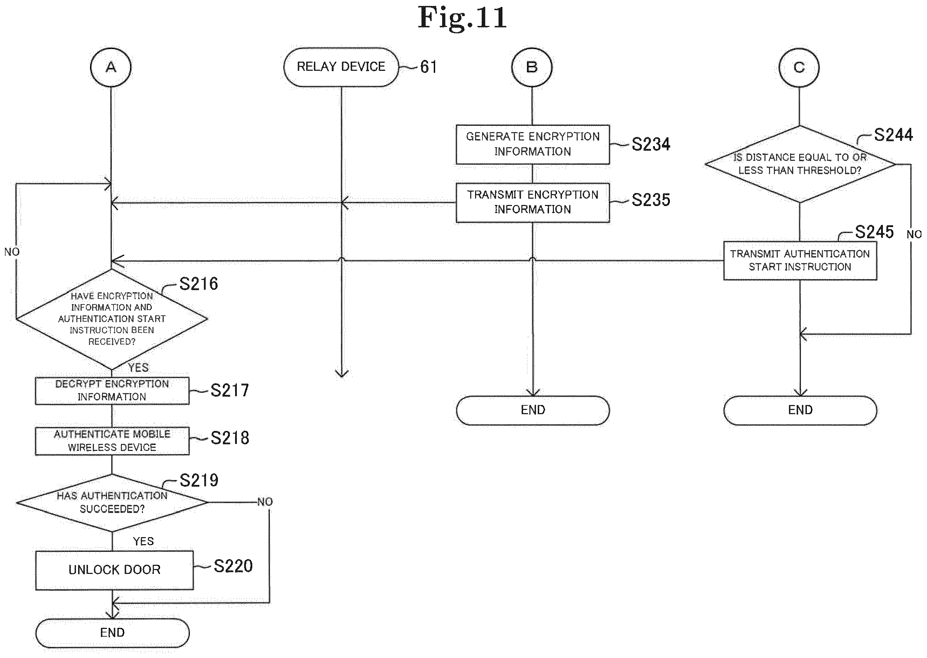

Next, a third exemplary embodiment of the present invention will be described referring to Figs. 9 to 11. Fig. 9 is a diagram for describing the configuration of an information processing system 201. Figs. 10 and 11 are diagrams for describing the operation of the information processing system 201.

### [Configuration]

In the information processing system 201 shown in Fig. 9, corresponding elements to those of the information processing system 101 shown in Fig. 7 are denoted by the same reference numerals. That is, the information processing system 201 is different in that a wireless authentication device 211 has a communication antenna 221 and a mobile wireless device 212 has a communication antenna 231. Moreover, the information processing system 201 is different in having a communication network 241 and a server device 251. The information processing system 201 is the same as the information processing system 101 in the rest of the configuration.

The communication antennas 221 and 231 are antennas for performing communication with the server device 251 via the communication network 241 (e.g., the Internet). In the example shown in Fig. 9, the wireless authentication device 211 includes two communication antennas, namely the communication antenna 25 and the communication antenna 221, but the wireless authentication device 211 can include, instead of the two communication antennas, one communication antenna having the function of the communication antenna 25 and the function of the communication antenna 221. Likewise, the mobile wireless device 212 can include one communication antenna having the function of the communication antenna 43 and the function of the communication antenna 231.

The server device 251 includes a communicating part 261 and a CPU 262 that operate under control by a program. Via the communication network 241, the communicating part 261 receives position information of the wireless authentication device 211 from the wireless authentication device 211, and receives position information of the mobile wireless device 212 from the mobile wireless device 212. Then, the communicating part 261 transmits an authentication start instruction that instructs start of authentication, to the wireless authentication device 211. Meanwhile, instead of transmitting an authentication start instruction to the wireless authentication device 211, the communicating part 261 can also transmit an encryption information transmission permission that permits transmission of encryption information (authentication information), to the mobile wireless device 212.

The CPU 262 includes function blocks of a distance acquiring part 271 and a controlling part 272. The respective blocks of the CPU 262 are configured to be able to transmit and receive signals and data with each other when necessary.

The distance acquiring part 271 acquires distance information representing the distance between the wireless authentication device 211 and the mobile wireless device 212, based on position information of the wireless authentication device 211 and position information of the mobile wireless device 212 that are received by the communicating part 261. The distance acquiring part 271 has the same configuration as the distance acquiring part 32 shown in Fig. 2 and the distance acquiring part 152 shown in Fig. 7.

The controlling part 272 determines whether the distance represented by the distance information acquired by the distance acquiring part 271 is equal to or less than a preset threshold. Then, in a case where the controlling part 272 determines that the distance is equal to or less than the threshold, the communicating part 261 transmits an authentication start instruction to the wireless authentication device 211.

### [Operation]

Next, referring to Figs. 10 and 11, the operation of the abovementioned information processing system 201 will be described in detail. Figs. 10 and 11 are flowcharts showing the operation of the information processing system 201. The operation of the information processing system 201 shown in Figs. 10 and 11 is an operation when a relay attack is performed.

Further, because steps S201, S211, S212, S214, S217 to S220 and S232 in Figs. 10 and 11 are equivalent to steps S31, S41, S42, S46, S45, S49 to S51 and S62 in Fig. 5, a detailed description thereof will be omitted.

First, at step S201, the relay device 61 transmits an unlocking instruction to the wireless authentication device 11.

Then, at step S211, the communicating part 24 of the wireless authentication device 211 receives an unlocking instruction transmitted at step S201 by the relay device 61. When an unlocking instruction is received, the controlling part 31 generates a random number at step S212. Subsequently, at step S213, the communicating part 24 transmits the random number generated at step S212, to the mobile wireless device 212.

Then, at step S231, the communicating part 42 of the mobile wireless device 212 receives the random number transmitted at step S213 and relayed by the relay device 61. After the random number is received, the position information acquiring part 44 of the mobile wireless device 212 acquires position information of the mobile wireless device 212 at step S232.

Then, at step S233, the communicating part 42 of the mobile wireless device 212 transmits the position information of the mobile wireless device 212 to the server device 251 via the communication antenna 231 and the communication network 241.

Then, at step S241, the communicating part 261 of the server device 251 receives the position information of the mobile wireless device 212 transmitted at step S233.

On the other hand, after step S213, the position information acquiring part 22 of the wireless authentication device 11 acquires position information of the wireless authentication device 211 at step S214. Then, at step S215, the communicating part 24 of the wireless authentication device 211 transmits the position information of the wireless authentication device 211 to the server device 251 via the communication antenna 221 and the communication network 241.

Then, at step S242, the communicating part 261 of the server device 251 receives the position information of the wireless authentication device 211 transmitted at step S125. Subsequently, at step S243, the distance acquiring part 271 of the server device 251 acquires distance information based on the position information of the mobile wireless device 212 received at step S241 and the position information of the wireless authentication device 11 received at step S242.

Then, at step S244 in Fig. 11, the controlling part 272 of the server device 251 determines whether the distance represented by the distance information acquired at step S243 is equal to or less than a preset threshold. That is, the controlling part 272 determines whether the mobile wireless device 212 and the wireless authentication device 211 are close to each other.

When it is determined at step S244 that the distance is equal to or less than the threshold (step S244: Yes), at step S245, the communicating part 261 transmits an authentication start instruction that instructs to start authentication to the wireless authentication device 211 via the communication network 241 and the communication antenna 221.

On the other hand, after step S233 in Fig. 10, the CPU 41 of the mobile wireless device 212 generates, at step S234 in Fig. 11, encryption information (authentication information) that the random number received at step S231 is encrypted by using a public key previously stored in the memory 46. Subsequently, at step S235, the communicating part 42 of the mobile wireless device 212 transmits the encryption information generated at step S234 to the wireless authentication device 211.

Then, at step S216, the communicating part 24 of the wireless authentication device 211 determines whether the encryption information transmitted at step S235 and relayed by the relay device 61 and the authentication start instruction transmitted at step S245 have been received. In the case of determining at step S216 that either the encryption information or the authentication start instruction has not been received yet (step S216: No), the communicating part 24 repeats step S21 until receiving both the encryption information and the authentication start instruction.

On the other hand, in a case where it is determined at step S216 that the encryption information and the authentication start instruction have been received (step S216: Yes), at step S217, the controlling part 31 of the wireless authentication device 211 decrypts the encryption information received at step S216.

Then, at step S218, the authenticating part 33 of the wireless authentication device 211 authenticates the mobile wireless device 212. Subsequently, at step S219, the authenticating part 33 of the wireless authentication device 211 determines whether the authentication has succeeded. In a case where it is determined at step S219 that the authentication has succeeded (step S219: Yes), the controlling part 31 of the wireless authentication device 211 unlocks the door of the vehicle at step S220.

After step S220, and when the authenticating part 33 determines No at step S219, the process by the information processing system 201 ends. Moreover, when the controlling part 272 determines No at step S244, step S245 is omitted and step S216 is not executed, so that the process by the information processing system 201 ends.

Thus, because the server device 251 acquires the distance between the wireless authentication device 211 and the mobile wireless device 212, and it is determined whether the acquired distance is equal to or less than the threshold or not, it is possible to reduce the processing load of the wireless authentication device 211 and the mobile wireless device 212.

Also when the door is unlocked at step S220 in Fig. 11 and, for example, the engine of the vehicle is running, the information processing system 201 can periodically execute steps S214, S215, S232, S233, and S241 to S244.

When the system periodically executes the abovementioned process and determines at step S244 that the distance is equal to or less than the threshold (step S244: No), namely when the distance between the wireless authentication device 211 and the mobile wireless device 212 is sufficiently long, the communicating part 261 can notify an electronic device held by the user, a predetermined device or the like that the system is subjected to a relay attack.

In the abovementioned example, the communicating part 261 transmits an authentication start instruction to the wireless authentication device 211 at step S245, but can transmit an encryption information transmission permission that permits transmission of encryption information (authentication information), to the mobile wireless device 212, instead of transmitting an authentication start instruction to the wireless authentication device 211.

Then, the mobile wireless device 212 may be configured to generate encryption information (step S234) and transmit (step S245) when receiving an encryption information transmission permission from the server device 251.

The present invention is not limited to the first to third exemplary embodiments described above, but can be changed and modified in various manners within the scope of the present invention. Besides, in the first to third exemplary embodiments described above, another device may have part of the functions.

### <Supplementary Notes>

The whole or part of the exemplary embodiments disclosed above can be described as the following supplementary notes. Below, the overview of the configuration of an information processing device or the like according to the present invention will be described. However, the present invention is not limited to the following configurations.

### (Supplementary Note 1)

An information processing system comprising:
a mobile wireless device carried by a user and including a first wireless communicating means; and
a wireless authentication device including a second wireless communicating means and an authenticating means for performing authentication that is to determine whether the mobile wireless device is associated with the wireless authentication device itself or not,
the information processing system comprising a distance acquiring means for acquiring distance information representing a distance between the mobile wireless device and the wireless authentication device, wherein:
   the second wireless communicating means is configured to transmit, to the mobile wireless device, an authentication information request representing a request for authentication information for determination whether the mobile wireless device and the wireless authentication device are associated with each other or not;
   the first wireless communicating means is configured to receive the authentication information request, and transmit the authentication information to the wireless authentication device;
   the second wireless communicating means is configured to receive the authentication information; and
   the authenticating means is configured to, when the distance represented by the acquired distance information is equal to or less than a preset threshold, perform authentication that is to determine whether the mobile wireless device is associated with the wireless authentication device or not, based on the received authentication information.

According to the abovementioned information processing system (e.g., the information processing system 1):
the mobile wireless device (e.g., the mobile wireless device 12) is carried by a user and includes the first wireless communicating means (e.g., the communicating part 42);
the wireless authentication device (e.g., the wireless authentication device 11) includes the second wireless communicating means (the communicating part 24) and the authenticating means (the authenticating part 33) for performing authentication that is to determine whether the mobile wireless device is associated with the wireless authentication device itself or not;
the information processing system includes the distance acquiring means (e.g., the distance acquiring part 32) for acquiring distance information representing the distance between the mobile wireless device and the wireless authentication device;
the second wireless communicating means transmits, to the mobile wireless device, an authentication information request representing a request for authentication information for determination whether the mobile wireless device and the wireless authentication device are associated with each other or not;
the first wireless communicating means receives the authentication information request, and transmits the authentication information to the wireless authentication device;
the second wireless communicating means receives the authentication information; and
when the distance represented by the acquired distance information is equal to or less than a preset threshold, the authenticating means performs authentication that is to determine whether the mobile wireless device is associated with the wireless authentication device or not, based on the received authentication information.

Thus, the abovementioned information processing system performs authentication when the distance between the mobile wireless device and the wireless authentication device is equal to or less than a threshold, and therefore, can prevent that authentication is performed when the distance between the mobile wireless device and the wireless authentication device is sufficiently long.

### (Supplementary Note 2)

The information processing system according to Supplementary Note 1, further comprising:
a first position information acquiring means for acquiring first position information representing a position of the mobile wireless device; and
a second position information acquiring means for acquiring second position information representing a position of the wireless authentication device,
wherein the distance acquiring means is configured to acquire the distance information based on the acquired first position information and the acquired second position information.

According to the abovementioned information processing system:
the first position information acquiring means (the position information acquiring part 44) acquires first position information representing the position of the mobile wireless device; and
the second position information acquiring means (the position information acquiring part 22) acquires second position information representing the position of the wireless authentication device; and
the distance acquiring means acquires the distance information based on the acquired first position information and the acquired second position information.

Thus, the abovementioned information system acquires the distance between the mobile wireless device and the wireless authentication device based on the position information of the mobile wireless device and the position information of the wireless authentication device, and therefore, can securely acquire the distance with a simple configuration.

### (Supplementary Note 3)

The information processing system according to Supplementary Note 1 or 2, further comprising a key controlling means for unlocking a door of an object to be used by the user when it is determined in the authentication that the mobile wireless device is associated with the wireless authentication device.

According to the abovementioned information processing system:
the key controlling means unlocks the door of an object to be used by the user when it is determined in the authentication that the mobile wireless device is associated with the wireless authentication device.

Thus, the abovementioned information processing system is capable of unlocking the door of an object only when the user holding the mobile wireless device comes close to the object, and therefore, can prevent that a third party uses the object.

### (Supplementary Note 4)

The information processing system according to Supplementary Note 2 or 3, wherein:
the mobile wireless device includes the first position information acquiring means;
the wireless authentication device includes the second position information acquiring means and the distance acquiring means;
the first wireless communicating means is configured to transmit the first position information to the wireless authentication device;
the second wireless communicating means is configured to receive the first position information; and
the distance acquiring means is configured to acquire the distance information based on the received first position information and the acquired second position information.

According to the abovementioned information processing system:
the mobile wireless device includes the first position information acquiring means;
the wireless authentication device includes the second position information acquiring means and the distance acquiring means;
the first wireless communicating means transmits the first position information to the wireless authentication device;
the second wireless communicating means receives the first position information; and
the distance acquiring means acquires the distance information based on the received first position information and the acquired second position information.

Thus, according to the abovementioned information processing system, the wireless authentication device acquires the distance between the mobile wireless device and the wireless authentication device and, when the distance is equal to or less than the threshold, immediately performs authentication, and therefore, it is possible to perform authentication more speedily.

### (Supplementary Note 5)

The information processing system according to Supplementary Note 3 or 4, wherein:
the distance acquiring means is configured to periodically acquire the distance information; and
the key controlling means is configured to, after the door of the object is unlocked, lock the door of the object in a case where the distance represented by the distance information exceeds the threshold while the object is being used.

According to the abovementioned information processing system:
the distance acquiring means periodically acquires the distance information; and
after the door of the object is unlocked, the key controlling means locks the door of the object in a case where the distance represented by the distance information exceeds the threshold while the object is being used.

Thus, also after unlocking the door of an object, the abovementioned information processing system periodically acquires distance information and determines whether a distance represented by the distance information is equal to or less than the threshold. Consequently, even if a third party succeeds in relay attack, the door of the object is locked when the distance is more than the threshold, and it can be prevented that the object is used by the third party.

### (Supplementary Note 6)

The information processing system according to Supplementary Note 2 or 3, wherein:
the mobile wireless device includes the first position information acquiring means and the distance acquiring means;
the wireless authentication device includes the second position information acquiring means;
the second wireless communicating means is configured to transmit the second position information to the mobile wireless device;
the first wireless communicating means is configured to receive the second position information;
the distance acquiring means is configured to acquire the distance information based on the received second position information and the acquired first position information; and
the first wireless communicating means is configured to transmit the authentication information to the wireless authentication device when the distance represented by the distance information is equal to or less than the threshold.

According to the abovementioned information processing system:
the mobile wireless device includes the first position information acquiring means and the distance acquiring means;
the wireless authentication device includes the second position information acquiring means;
the second wireless communicating means transmits the second position information to the mobile wireless device;
the first wireless communicating receives the second position information;
the distance acquiring means acquires the distance information based on the received second position information and the acquired first position information; and
the first wireless communicating means transmits the authentication information to the wireless authentication device when the distance represented by the distance information is equal to or less than the threshold.

Thus, according to the abovementioned information processing system, the mobile wireless device acquires the distance between the mobile wireless device and the wireless authentication device and, when the distance is equal to or less than the threshold, transmits authentication information to the wireless authentication device. In other words, because the mobile wireless device does not transmit authentication information to the wireless authentication device when the distance is more than the threshold, it is possible to increase communication efficiency and increase security.

### (Supplementary Note 7)

The information processing system according to Supplementary Note 2 or 3, the information processing system further comprising a server device connected with the mobile wireless device and the wireless authentication device via a communication network, wherein:
the mobile wireless device includes the first position information acquiring means;
the wireless authentication device includes the second position information acquiring means;
the server device includes the distance acquiring means;
the first wireless communicating means is configured to transmit the first position information to the server device;
the second wireless communicating means is configured to transmit the second position information to the server device;
the server device is configured to receive the first position information and the second position information;
the distance acquiring means is configured to acquire the distance information based on the received first position information and the received second position information;
the server device is configured to, when the distance represented by the distance information is equal to or less than the threshold, transmit an authentication start instruction that is an instruction to start the authentication, to the wireless authentication device; and
the authenticating means is configured to perform the authentication when the authentication start instruction is received by the second wireless communicating means.

According to the abovementioned information processing system:
the information processing system further includes the server device connected with the mobile wireless device and the wireless authentication device via the communication network;
the mobile wireless device includes the first position information acquiring means;
the wireless authentication device includes the second position information acquiring means;
the server device includes the distance acquiring means;
the first wireless communicating means transmits the first position information to the server device;
the second wireless communicating means transmits the second position information to the server device;
the server device receives the first position information and the second position information;
the distance acquiring means acquires the distance information based on the received first position information and the received second position information;
when the distance represented by the distance information is equal to or less than the threshold, the server device transmits an authentication start instruction that is an instruction to start the authentication, to the wireless authentication device; and
the authenticating means performs the authentication when the authentication start instruction is received by the second wireless communicating means.

Thus, according to the abovementioned information processing system, the server device acquires the distance between the mobile wireless device and the wireless authentication device and, when the distance is equal to or less than the threshold, instructs the wireless authentication device to start authentication, and therefore, it is possible to reduce processing load on the mobile wireless device and the wireless authentication device.

### (Supplementary Note 8)

An information processing method by an information processing system, the information processing system including: a mobile wireless device carried by a user and including a first wireless communicating means; and a wireless authentication device including a second wireless communicating means and an authenticating means for performing authentication that is to determine whether the mobile wireless device is associated with the wireless authentication device itself or not,
the information processing method comprising:
transmitting, to the mobile wireless device, an authentication information request representing a request for authentication information for determination whether the mobile wireless device and the wireless authentication device are associated with each other or not, by the second wireless communicating means;
receiving the authentication information request, and transmitting the authentication information to the wireless authentication device, by the first wireless communicating means;
receiving the authentication information, by the second wireless communicating means;
acquiring distance information representing a distance between the mobile wireless device and the wireless authentication device; and
when the distance represented by the acquired distance information is equal to or less than a preset threshold, performing authentication that is to determine whether the mobile wireless device is associated with the wireless authentication device or not, based on the received authentication information.

### (Supplementary Note 9)

A wireless authentication device comprising:
a wireless communicating means for transmitting, to a mobile wireless device carried by a user, an authentication information request representing a request for authentication information for determination whether the mobile wireless device is associated with the wireless authentication device itself or not, and receiving the authentication information transmitted from the mobile wireless device;
a distance acquiring means for acquiring distance information representing a distance between the mobile wireless device and the wireless authentication device itself; and
an authenticating means for, when the distance represented by the acquired distance information is equal to or less than a preset threshold, performing authentication that is to determine whether the mobile wireless device is associated with the wireless authentication device itself or not based on the received authentication information.

### (Supplementary Note 10)

An authentication device control method applied to an authentication device performing authentication that is to determine whether a mobile wireless device carried by a user is associated with the authentication device itself or not,
the authentication device control method comprising:
transmitting, to the mobile wireless device, an authentication information request representing a request for authentication information for determination whether the mobile wireless device is associated with the authentication device or not, and receiving the authentication information transmitted from the mobile wireless device;
acquiring distance information representing a distance between the mobile wireless device and the authentication device itself; and
when the distance represented by the acquired distance information is equal to or less than a preset threshold, perform the authentication that is to determine whether the mobile wireless device is associated with the authentication device or not, based on the received authentication information.

### (Supplementary Note 11)

A computer program comprising instructions for causing an authentication device, which performs authentication that is to determine whether a mobile wireless device carried by a user is associated with the authentication device itself or not, to function as:
a wireless communicating means for transmitting, to the mobile wireless device, an authentication information request representing a request for authentication information for determination whether the mobile wireless device is associated with the authentication device or not, and receiving the authentication information transmitted from the mobile wireless device;
a distance acquiring means for acquiring distance information representing a distance between the mobile wireless device and the authentication device; and
an authenticating means for, when the distance represented by the acquired distance information is equal to or less than a preset threshold, perform the authentication that is to determine whether the mobile wireless device is associated with the authentication device or not, based on the received authentication information.

### (Supplementary Note 12)

A mobile wireless device comprising:
a wireless communicating means for, from a wireless authentication device, receiving an authentication information request representing a request for authentication information for determination whether the mobile wireless device itself is associated with the wireless authentication device or not; and
a distance acquiring means for acquiring distance information representing a distance between the wireless authentication device and the mobile wireless device itself,
wherein the wireless communicating means is configured to, when the distance represented by the acquired distance information is equal to or less than a preset threshold, transmit the authentication information to the wireless authentication device.

### (Supplementary Note 13)

A mobile wireless device control method applied to a mobile wireless device carried by a user, the mobile wireless device control method comprising:
from a wireless authentication device, receiving an authentication information request representing a request for authentication information for determination whether the mobile wireless device is associated with the wireless authentication device or not;
acquiring distance information representing a distance between the wireless authentication device and the mobile wireless device; and
when the distance represented by the acquired distance information is equal to or less than a preset threshold, transmitting the authentication information to the wireless authentication device.

### (Supplementary Note 14)

A computer program comprising instructions for causing a mobile wireless device carried by a user to function as:
a wireless communicating means for, from a wireless authentication device, receiving an authentication information request representing a request for authentication information for determination whether the mobile wireless device is associated with the wireless authentication device or not; and
a distance acquiring means for acquiring distance information representing a distance between the wireless authentication device and the mobile wireless device,
wherein the wireless communicating means is configured to, when the distance represented by the acquired distance information is equal to or less than a preset threshold, transmit the authentication information to the wireless authentication device.

The program disclosed in each of the abovementioned exemplary embodiments and Supplementary Notes is stored in a storage device or recorded on a computer-readable recording medium. For example, the recording medium is a portable medium such as a flexible disk, an optical disk, a magneto-optical disk and a semiconductor memory.

Although the present invention is described above referring to the exemplary embodiments, the present invention is not limited to the abovementioned exemplary embodiments. The configurations and details of the present invention can be changed and altered in various manners that can be understood by one skilled in the art within the scope of the present invention.

### DESCRIPTION OF REFERENCE NUMERALS

- 1: information processing system
- 11: wireless authentication device
- 12: mobile wireless device
- 22: position information acquiring part
- 24: communicating part
- 32: distance acquiring part
- 33: authenticating part
- 42: communicating part
- 44: position information acquiring part
- 101: information processing system
- 111: wireless authentication device
- 112: mobile wireless device
- 152: distance acquiring part
- 201: information processing system
- 211: wireless authentication device
- 212: mobile wireless device
- 251: server device
- 271: distance acquiring part

## Claims

1. An information processing system comprising:
a mobile wireless device (12) carried by a user and including a first wireless communicating means; and
a wireless authentication device (11) including a second wireless communicating means and an authenticating means for performing authentication that is to determine whether the mobile wireless device is associated with the wireless authentication device itself or not,
the information processing system comprising a distance acquiring means for (32) acquiring distance information representing a distance between the mobile wireless device and the wireless authentication device, wherein:
the second wireless communicating means is configured to transmit, to the mobile wireless device, an authentication information request representing a request for authentication information for determination whether the mobile wireless device and the wireless authentication device are associated with each other or not;
the first wireless communicating means is configured to receive the authentication information request, and transmit the authentication information to the wireless authentication device;
the second wireless communicating means is configured to receive the authentication information;
the authenticating means (33) is configured to, when the distance represented by the acquired distance information is equal to or less than a preset threshold, perform authentication that is to determine whether the mobile wireless device is associated with the wireless authentication device or not, based on the received authentication information; and
further comprising a key controlling means (31) for unlocking a door of an object to be used by the user when it is determined in the authentication that the mobile wireless device is associated with the wireless authentication device, wherein:
the distance acquiring means is configured to periodically acquire the distance information; and
the key controlling means is configured to, after the door of the object is unlocked, lock the door of the object in a case where the distance represented by the distance information exceeds the threshold while the object is being used.

2. The information processing system according to Claim 1, further comprising:
a first position information acquiring means for acquiring first position information representing a position of the mobile wireless device; and
a second position information acquiring means for acquiring second position information representing a position of the wireless authentication device,
wherein the distance acquiring means is configured to acquire the distance information based on the acquired first position information and the acquired second position information.

3. The information processing system according to Claim 1 or 2, wherein:
the mobile wireless device includes the first position information acquiring means (44);
the wireless authentication device includes the second position information acquiring means and the distance acquiring means (22);
the first wireless communicating means is configured to transmit the first position information to the wireless authentication device;
the second wireless communicating means is configured to receive the first position information; and
the distance acquiring means (32) is configured to acquire the distance information based on the received first position information and the acquired second position information.

4. The information processing system according to Claim 1 or 2, wherein:
the mobile wireless device includes the first position information acquiring means (44) and the distance acquiring means;
the wireless authentication device includes the second position information acquiring means (22);
the second wireless communicating means is configured to transmit the second position information to the mobile wireless device;
the first wireless communicating means is configured to receive the second position information;
the distance acquiring means(152) is configured to acquire the distance information based on the received second position information and the acquired first position information; and
the first wireless communicating means is configured to transmit the authentication information to the wireless authentication device when the distance represented by the distance information is equal to or less than the threshold.

5. The information processing system according to Claim 1 or 2, the information processing system further comprising a server device (251) connected with the mobile wireless device and the wireless authentication device via a communication network, wherein:
the mobile wireless device includes the first position information acquiring means (44);
the wireless authentication device includes the second position information acquiring means (22);
the server device includes the distance acquiring means (271);
the first wireless communicating means is configured to transmit the first position information to the server device;
the second wireless communicating means is configured to transmit the second position information to the server device;
the server device is configured to receive the first position information and the second position information;
the distance acquiring means is configured to acquire the distance information based on the received first position information and the received second position information;
the server device is configured to, when the distance represented by the distance information is equal to or less than the threshold, transmit an authentication start instruction that is an instruction to start the authentication, to the wireless authentication device; and
the authenticating means (33) is configured to perform the authentication when the authentication start instruction is received by the second wireless communicating means.

6. An information processing method by an information processing system, the information processing system including: a mobile wireless device carried by a user and including a first wireless communicating means; and a wireless authentication device including a second wireless communicating means and an authenticating means for performing authentication that is to determine whether the mobile wireless device is associated with the wireless authentication device itself or not,
the information processing method comprising:
transmitting, to the mobile wireless device, an authentication information request representing a request for authentication information for determination whether the mobile wireless device and the wireless authentication device are associated with each other or not, by the second wireless communicating means;
receiving the authentication information request, and transmitting the authentication information to the wireless authentication device, by the first wireless communicating means;
receiving the authentication information, by the second wireless communicating means;
periodically acquiring distance information representing a distance between the mobile wireless device and the wireless authentication device;
when the distance represented by the acquired distance information is equal to or less than a preset threshold, performing authentication that is to determine whether the mobile wireless device is associated with the wireless authentication device or not, based on the received authentication information; and
controlling unlocking of a door of an object to be used by the user when it is determined in the authentication that the mobile wireless device is associated with the wireless authentication device, wherein:
the controlling step, after the door of the object is unlocked in the unlocking step, locks the door of the object in a case where the distance represented by the distance information exceeds the threshold while the object is being used.

7. A wireless authentication device comprising:
a wireless communicating means for transmitting, to a mobile wireless device carried by a user, an authentication information request representing a request for authentication information for determination whether the mobile wireless device is associated with the wireless authentication device itself or not, and receiving the authentication information transmitted from the mobile wireless device;
a distance acquiring means for acquiring distance information representing a distance between the mobile wireless device and the wireless authentication device itself; and
an authenticating means for, when the distance represented by the acquired distance information is equal to or less than a preset threshold, performing authentication that is to determine whether the mobile wireless device is associated with the wireless authentication device itself or not based on the received authentication information ; and
further comprising a key controlling means (31) for unlocking a door of an object to be used by the user when it is determined in the authentication that the mobile wireless device is associated with the wireless authentication device, wherein:
the distance acquiring means is configured to periodically acquire the distance information; and
the key controlling means is configured to, after the door of the object is unlocked, lock the door of the object in a case where the distance represented by the distance information exceeds the threshold while the object is being used.

8. An authentication device control method applied to an authentication device performing authentication that is to determine whether a mobile wireless device carried by a user is associated with the authentication device itself or not,
the authentication device control method comprising:
transmitting, to the mobile wireless device, an authentication information request representing a request for authentication information for determination whether the mobile wireless device is associated with the authentication device or not, and receiving the authentication information transmitted from the mobile wireless device;
periodically acquiring distance information representing a distance between the mobile wireless device and the authentication device itself;
when the distance represented by the acquired distance information is equal to or less than a preset threshold, perform the authentication that is to determine whether the mobile wireless device is associated with the authentication device or not, based on the received authentication information; and
controlling unlocking of a door of an object to be used by the user when it is determined in the authentication that the mobile wireless device is associated with the wireless authentication device, wherein:
the controlling step, after the door of the object is unlocked in the unlocking step, locks the door of the object in a case where the distance represented by the distance information exceeds the threshold while the object is being used.

9. A computer program comprising instructions for causing an authentication device, which performs authentication that is to determine whether a mobile wireless device carried by a user is associated with the authentication device itself or not, to function as:
a wireless communicating means for transmitting, to the mobile wireless device, an authentication information request representing a request for authentication information for determination whether the mobile wireless device is associated with the authentication device or not, and receiving the authentication information transmitted from the mobile wireless device;
a distance acquiring means for acquiring distance information representing a distance between the mobile wireless device and the authentication device; and
an authenticating means for, when the distance represented by the acquired distance information is equal to or less than a preset threshold, perform the authentication that is to determine whether the mobile wireless device is associated with the authentication device or not, based on the received authentication information ; and
further comprising a key controlling means (31) for unlocking a door of an object to be used by the user when it is determined in the authentication that the mobile wireless device is associated with the wireless authentication device, wherein:
the distance acquiring means is configured to periodically acquire the distance information; and
the key controlling means is configured to, after the door of the object is unlocked, lock the door of the object in a case where the distance represented by the distance information exceeds the threshold while the object is being used.

## Patentansprüche

1. Informationsverarbeitungssystem, das Folgendes aufweist:
eine mobile drahtlose Vorrichtung (12), die von einem Benutzer getragen wird und ein erstes Mittel zur drahtlosen Kommunikation beinhaltet; und
eine drahtlose Authentifizierungsvorrichtung (11), die ein zweites Mittel zur drahtlosen Kommunikation und ein Authentifizierungsmittel zum Durchführen einer Authentifizierung, die bestimmen soll, ob die mobile drahtlose Vorrichtung der drahtlosen Authentifizierungsvorrichtung selbst zugeordnet ist oder nicht, beinhaltet,
wobei das Informationsverarbeitungssystem ein Entfernungserfassungsmittel (32) zum Erfassen von Entfernungsinformationen aufweist, die eine Entfernung zwischen der mobilen drahtlosen Vorrichtung und der drahtlosen Authentifizierungsvorrichtung repräsentieren, wobei:
das zweite Mittel zur drahtlosen Kommunikation zum Übertragen einer Authentifizierungsinformationsanfrage an die mobile drahtlose Vorrichtung konfiguriert ist, die eine Anfrage nach Authentifizierungsinformationen zum Bestimmen, ob die mobile drahtlose Vorrichtung und die drahtlose Authentifizierungsvorrichtung einander zugeordnet sind oder nicht, repräsentiert;
das erste Mittel zur drahtlosen Kommunikation zum Empfangen der Authentifizierungsinformationsanfrage und Übertragen der Authentifizierungsinformationen an die drahtlose Authentifizierungsvorrichtung konfiguriert ist;
das zweite Mittel zur drahtlosen Kommunikation zum Empfangen der Authentifizierungsinformationen konfiguriert ist;
das Authentifizierungsmittel (33) zum Durchführen einer Authentifizierung, die bestimmen soll, ob die mobile drahtlose Vorrichtung der drahtlosen Authentifizierungsvorrichtung zugeordnet ist oder nicht, auf Basis der empfangenen Authentifizierungsinformationen, wenn die von den erfassten Entfernungsinformationen repräsentierte Entfernung kleiner oder gleich einem voreingestellten Schwellenwert ist, konfiguriert ist; und
das ferner ein Schlüsselsteuermittel (31) aufweist zum Entriegeln einer Tür eines von dem Benutzer zu benutzenden Objekts, wenn bei der Authentifizierung bestimmt wird, dass die mobile drahtlose Vorrichtung der drahtlosen Authentifizierungsvorrichtung zugeordnet ist, wobei:
das Entfernungserfassungsmittel zum periodischen Erfassen der Entfernungsinformationen konfiguriert ist und
das Schlüsselsteuermittel zum Verriegeln der Tür des Objekts nach dem Entriegeln der Tür des Objekts in einem Fall, in dem die von den Entfernungsinformationen repräsentierte Entfernung den Schwellenwert übersteigt, während das Objekt benutzt wird, konfiguriert ist.

2. Informationsverarbeitungssystem nach Anspruch 1, das ferner Folgendes aufweist:
ein erstes Positionsinformationserfassungsmittel zum Erfassen erster Positionsinformationen, die eine Position der mobilen drahtlosen Vorrichtung repräsentieren; und
ein zweites Positionsinformationserfassungsmittel zum Erfassen zweiter Positionsinformationen, die eine Position der drahtlosen Authentifizierungsvorrichtung repräsentieren,
wobei das Entfernungserfassungsmittel zum Erfassen der Entfernungsinformationen auf Basis der erfassten ersten Positionsinformationen und der erfassten zweiten Positionsinformationen konfiguriert ist.

3. Informationsverarbeitungssystem nach Anspruch 1 oder 2, wobei:
die mobile drahtlose Vorrichtung das erste Positionsinformationserfassungsmittel (44) beinhaltet;
die drahtlose Authentifizierungsvorrichtung das zweite Positionsinformationserfassungsmittel und das Entfernungserfassungsmittel (22) beinhaltet;
das erste Mittel zur drahtlosen Kommunikation zum Übertragen der ersten Positionsinformationen an die drahtlose Authentifizierungsvorrichtung konfiguriert ist;
das zweite Mittel zur drahtlosen Kommunikation zum Empfangen der ersten Positionsinformationen konfiguriert ist und
das Entfernungserfassungsmittel (32) zum Erfassen der Entfernungsinformationen auf Basis der empfangenen ersten Positionsinformationen und der erfassten zweiten Positionsinformationen konfiguriert ist.

4. Informationsverarbeitungssystem nach Anspruch 1 oder 2, wobei:
die mobile drahtlose Vorrichtung das erste Positionsinformationserfassungsmittel (44) und das Entfernungserfassungsmittel beinhaltet;
die drahtlose Authentifizierungsvorrichtung das zweite Positionsinformationserfassungsmittel (22) beinhaltet;
das zweite Mittel zur drahtlosen Kommunikation zum Übertragen der zweiten Positionsinformationen an die mobile drahtlose Vorrichtung konfiguriert ist;
das erste Mittel zur drahtlosen Kommunikation zum Empfangen der zweiten Positionsinformationen konfiguriert ist;
das Entfernungserfassungsmittel (152) zum Erfassen der Entfernungsinformationen auf Basis der empfangenen zweiten Positionsinformationen und der erfassten ersten Positionsinformationen konfiguriert ist; und
das erste Mittel zur drahtlosen Kommunikation zum Übertragen der Authentifizierungsinformationen an die drahtlose Authentifizierungsvorrichtung, wenn die von den Entfernungsinformationen repräsentierte Entfernung kleiner oder gleich dem Schwellenwert ist, konfiguriert ist.

5. Informationsverarbeitungssystem nach Anspruch 1 oder 2, wobei das Informationsverarbeitungssystem ferner eine Servervorrichtung (251) aufweist, die über ein Kommunikationsnetzwerk mit der mobilen drahtlosen Vorrichtung und der drahtlosen Authentifizierungsvorrichtung verbunden ist, wobei:
die mobile drahtlose Vorrichtung das erste Positionsinformationserfassungsmittel (44) beinhaltet;
die drahtlose Authentifizierungsvorrichtung das zweite Positionsinformationserfassungsmittel (22) beinhaltet;
die Servervorrichtung das Entfernungserfassungsmittel (271) beinhaltet;
das erste Mittel zur drahtlosen Kommunikation zum Übertragen der ersten Positionsinformationen an die Servervorrichtung konfiguriert ist;
das zweite Mittel zur drahtlosen Kommunikation zum Übertragen der zweiten Positionsinformationen an die Servervorrichtung konfiguriert ist;
die Servervorrichtung zum Empfangen der ersten Positionsinformationen und der zweiten Positionsinformationen konfiguriert ist;
das Entfernungserfassungsmittel zum Erfassen der Entfernungsinformationen auf Basis der empfangenen ersten Positionsinformationen und der empfangenen zweiten Positionsinformationen konfiguriert ist;
die Servervorrichtung zum Übertragen einer Authentifizierungsstartanweisung, die eine Anweisung zum Starten der Authentifizierung ist, an die drahtlose Authentifizierungsvorrichtung, wenn die von den Entfernungsinformationen repräsentierte Entfernung kleiner oder gleich dem Schwellenwert ist, konfiguriert ist und
das Authentifizierungsmittel (33) zum Durchführen der Authentifizierung, wenn die Authentifizierungsstartanweisung vom zweiten Mittel zur drahtlosen Kommunikation empfangen wird, konfiguriert ist.

6. Informationsverarbeitungsverfahren durch ein Informationsverarbeitungssystem, wobei das Informationsverarbeitungssystem Folgendes beinhaltet: eine mobile drahtlose Vorrichtung, die von einem Benutzer getragen wird und ein erstes Mittel zur drahtlosen Kommunikation beinhaltet; und eine drahtlose Authentifizierungsvorrichtung, die ein zweites Mittel zur drahtlosen Kommunikation und ein Authentifizierungsmittel zum Durchführen einer Authentifizierung, die bestimmen soll, ob die mobile drahtlose Vorrichtung der drahtlosen Authentifizierungsvorrichtung selbst zugeordnet ist oder nicht,
wobei das Informationsverarbeitungsverfahren Folgendes aufweist:
Übertragen einer Authentifizierungsinformationsanfrage an die mobile drahtlose Vorrichtung, die eine Anfrage nach Authentifizierungsinformationen zum Bestimmen, ob die mobile drahtlose Vorrichtung und die drahtlose Authentifizierungsvorrichtung einander zugeordnet sind oder nicht, repräsentiert, durch das zweite Mittel zur drahtlosen Kommunikation;
Empfangen der Authentifizierungsinformationsanfrage und Übertragen der Authentifizierungsinformationen an die drahtlose Authentifizierungsvorrichtung durch das erste Mittel zur drahtlosen Kommunikation;
Empfangen der Authentifizierungsinformationen durch das zweite Mittel zur drahtlosen Kommunikation;
periodisches Erfassen von Entfernungsinformationen, die eine Entfernung zwischen der mobilen drahtlosen Vorrichtung und der drahtlosen Authentifizierungsvorrichtung repräsentieren;
Durchführen einer Authentifizierung, die bestimmen soll, ob die mobile drahtlose Vorrichtung der drahtlosen Authentifizierungsvorrichtung zugeordnet ist oder nicht, auf Basis der empfangenen Authentifizierungsinformationen, wenn die von den erfassten Entfernungsinformationen repräsentierte Entfernung kleiner oder gleich einem voreingestellten Schwellenwert ist; und
Steuern des Entriegelns einer Tür eines von dem Benutzer zu benutzenden Objekts, wenn bei der Authentifizierung bestimmt wird, dass die mobile drahtlose Vorrichtung der drahtlosen Authentifizierungsvorrichtung zugeordnet ist, wobei:
der Steuerschritt nach Entriegeln der Tür des Objekts im Entriegelungsschritt die Tür des Objekts in einem Fall verriegelt, in dem die von den Entfernungsinformationen repräsentierte Entfernung den Schwellenwert übersteigt, während das Objekt benutzt wird.

7. Drahtlose Authentifizierungsvorrichtung, die Folgendes aufweist:
ein Mittel zur drahtlosen Kommunikation zum Übertragen einer Authentifizierungsinformationsanfrage an eine von einem Benutzer getragene mobile drahtlose Vorrichtung, die eine Anfrage nach Authentifizierungsinformationen zum Bestimmen, ob die mobile drahtlose Vorrichtung der drahtlosen Authentifizierungsvorrichtung selbst zugeordnet ist oder nicht, repräsentiert, und Empfangen der aus der mobilen drahtlosen Vorrichtung übertragenen Authentifizierungsinformationen;
ein Entfernungserfassungsmittel zum Erfassen von Entfernungsinformationen, die eine Entfernung zwischen der mobilen drahtlosen Vorrichtung und der drahtlosen Authentifizierungsvorrichtung selbst repräsentieren; und
ein Authentifizierungsmittel zum Durchführen einer Authentifizierung, die bestimmen soll, ob die mobile drahtlose Vorrichtung der drahtlosen Authentifizierungsvorrichtung selbst zugeordnet ist oder nicht, auf Basis der empfangenen Authentifizierungsinformationen, wenn die von den erfassten Entfernungsinformationen repräsentierte Entfernung kleiner oder gleich einem voreingestellten Schwellenwert ist; und
die ferner ein Schlüsselsteuermittel (31) aufweist zum Entriegeln einer Tür eines von dem Benutzer zu benutzenden Objekts, wenn bei der Authentifizierung bestimmt wird, dass die mobile drahtlose Vorrichtung der drahtlosen Authentifizierungsvorrichtung zugeordnet ist, wobei:
das Entfernungserfassungsmittel zum periodischen Erfassen der Entfernungsinformationen konfiguriert ist und
das Schlüsselsteuermittel zum Verriegeln der Tür des Objekts nach dem Entriegeln der Tür des Objekts in einem Fall, in dem die von den Entfernungsinformationen repräsentierte Entfernung den Schwellenwert übersteigt, während das Objekt benutzt wird, konfiguriert ist.

8. Steuerungsverfahren für eine Authentifizierungsvorrichtung, das auf eine Authentifizierungsvorrichtung angewendet wird, die eine Authentifizierung durchführt, die bestimmen soll, ob eine von einem Benutzer getragene mobile drahtlose Vorrichtung der Authentifizierungsvorrichtung selbst zugeordnet ist oder nicht,
wobei das Steuerungsverfahren für eine Authentifizierungsvorrichtung Folgendes aufweist:
Übertragen einer Authentifizierungsinformationsanfrage an die mobile drahtlose Vorrichtung, die eine Anfrage nach Authentifizierungsinformationen zum Bestimmen, ob die mobile drahtlose Vorrichtung der Authentifizierungsvorrichtung zugeordnet ist oder nicht, repräsentiert, und Empfangen der aus der mobilen drahtlosen Vorrichtung übertragenen Authentifizierungsinformationen;
periodisches Erfassen von Entfernungsinformationen, die eine Entfernung zwischen der mobilen drahtlosen Vorrichtung und der Authentifizierungsvorrichtung selbst repräsentieren;
Durchführen der Authentifizierung, die bestimmen soll, ob die mobile drahtlose Vorrichtung der Authentifizierungsvorrichtung zugeordnet ist oder nicht, auf Basis der empfangenen Authentifizierungsinformationen, wenn die von den erfassten Entfernungsinformationen repräsentierte Entfernung kleiner oder gleich einem voreingestellten Schwellenwert ist; und
Steuern des Entriegelns einer Tür eines von dem Benutzer zu benutzenden Objekts, wenn bei der Authentifizierung bestimmt wird, dass die mobile drahtlose Vorrichtung der drahtlosen Authentifizierungsvorrichtung zugeordnet ist, wobei:
der Steuerschritt nach Entriegeln der Tür des Objekts im Entriegelungsschritt die Tür des Objekts in einem Fall verriegelt, in dem die von den Entfernungsinformationen repräsentierte Entfernung den Schwellenwert übersteigt, während das Objekt benutzt wird.

9. Computerprogramm, das Anweisungen zum Veranlassen einer Authentifizierungsvorrichtung, die eine Authentifizierung durchführt, die bestimmen soll, ob eine von einem Benutzer getragene mobile drahtlose Vorrichtung der Authentifizierungsvorrichtung selbst zugeordnet ist oder nicht, zum Funktionieren als Folgendes aufweist:
ein Mittel zur drahtlosen Kommunikation zum Übertragen einer Authentifizierungsinformationsanfrage an die mobile drahtlose Vorrichtung, die eine Anfrage nach Authentifizierungsinformationen zum Bestimmen, ob die mobile drahtlose Vorrichtung der drahtlosen Authentifizierungsvorrichtung zugeordnet ist oder nicht, repräsentiert, und Empfangen der aus der mobilen drahtlosen Vorrichtung übertragenen Authentifizierungsinformationen;
ein Entfernungserfassungsmittel zum Erfassen von Entfernungsinformationen, die eine Entfernung zwischen der mobilen drahtlosen Vorrichtung und der Authentifizierungsvorrichtung repräsentieren; und
ein Authentifizierungsmittel zum Durchführen der Authentifizierung, die bestimmen soll, ob die mobile drahtlose Vorrichtung der drahtlosen Authentifizierungsvorrichtung zugeordnet ist oder nicht, auf Basis der empfangenen Authentifizierungsinformationen, wenn die von den erfassten Entfernungsinformationen repräsentierte Entfernung kleiner oder gleich einem voreingestellten Schwellenwert ist; und
die ferner ein Schlüsselsteuermittel (31) aufweist zum Entriegeln einer Tür eines von dem Benutzer zu benutzenden Objekts, wenn bei der Authentifizierung bestimmt wird, dass die mobile drahtlose Vorrichtung der drahtlosen Authentifizierungsvorrichtung zugeordnet ist, wobei:
das Entfernungserfassungsmittel zum periodischen Erfassen der Entfernungsinformationen konfiguriert ist und
das Schlüsselsteuermittel zum Verriegeln der Tür des Objekts nach dem Entriegeln der Tür des Objekts in einem Fall, in dem die von den Entfernungsinformationen repräsentierte Entfernung den Schwellenwert übersteigt, während das Objekt benutzt wird, konfiguriert ist.

## Revendications

1. Système de traitement d'informations comprenant :
un dispositif sans fil mobile (12) porté par un utilisateur et comportant un premier moyen de communication sans fil ; et
un dispositif d'authentification sans fil (11) comportant un second moyen de communication sans fil et un moyen d'authentification pour exécuter une authentification servant à déterminer que le dispositif sans fil mobile est ou non associé au dispositif d'authentification sans fil,
le système de traitement d'informations comprenant un moyen d'acquisition de distance pour (32) acquérir des informations de distance représentant une distance entre le dispositif sans fil mobile et le dispositif d'authentification sans fil, dans lequel
le second moyen de communication sans fil est configuré pour transmettre, au dispositif sans fil mobile, une requête d'informations d'authentification représentant une requête demandant des informations d'authentification pour déterminer que le dispositif sans fil mobile et le dispositif d'authentification sans fil sont ou non associés l'un à l'autre ;
le premier moyen de communication sans fil est configuré pour recevoir la requête d'informations d'authentification, et transmettre les informations d'authentification au dispositif d'authentification sans fil ;
le second moyen de communication sans fil est configuré pour recevoir les informations d'authentification ;
le moyen d'authentification (33) est configuré pour, quand la distance représentée par les informations de distance acquises est égale ou inférieure à un seuil prédéfini, exécuter une authentification servant à déterminer que le dispositif sans fil mobile est associé ou non au dispositif d'authentification sans fil, en fonction des informations d'authentification reçues ; et
comprenant en outre un moyen de commande de clé (31) pour déverrouiller une porte d'un objet à utiliser par l'utilisateur quand il est déterminé à l'authentification que le dispositif sans fil mobile est associé au dispositif d'authentification sans fil, dans lequel :
le moyen d'acquisition de distance est configuré pour acquérir périodiquement les informations de distance ; et
le moyen de commande de clé est configuré pour, après que la porte de l'objet est déverrouillée, verrouiller la porte de l'objet si la distance représentée par les informations de distance dépasse le seuil pendant que l'objet est utilisé.

2. Système de traitement d'informations selon la revendication 1, comprenant en outre :
un premier moyen d'acquisition d'informations de position pour acquérir des premières informations de position représentant une position du dispositif sans fil mobile ; et
un second moyen d'acquisition d'informations de position pour acquérir des secondes informations de position représentant une position du dispositif d'authentification sans fil ;
dans lequel le moyen d'acquisition de distance est configuré pour acquérir les informations de distance en fonction des premières informations de position acquises et des secondes informations de position acquises.

3. Système de traitement d'informations selon la revendication 1 ou 2, dans lequel :
le dispositif sans fil mobile comporte le premier moyen d'acquisition d'informations de position (44) ;
le dispositif d'authentification sans fil comporte le second moyen d'acquisition d'informations de position et le moyen d'acquisition de distance (22) ;
le premier moyen de communication sans fil est configuré pour transmettre les premières informations de position au dispositif d'authentification sans fil ;
le second moyen de communication sans fil est configuré pour recevoir les premières informations de position ; et
le moyen d'acquisition de distance (32) est configuré pour acquérir les informations de distance en fonction des premières informations de position reçues et des secondes informations de position acquises.

4. Système de traitement d'informations selon la revendication 1 ou 2, dans lequel :
le dispositif sans fil mobile comporte le premier moyen d'acquisition d'informations de position (44) et le moyen d'acquisition de distance ;
le dispositif d'authentification sans fil comporte le second moyen d'acquisition d'informations de position (22) ;
le second moyen de communication sans fil est configuré pour transmettre les secondes informations de position au dispositif sans fil mobile ;
le premier moyen de communication sans fil est configuré pour recevoir les secondes informations de position ;
le moyen d'acquisition de distance (152) est configuré pour acquérir les informations de distance en fonction des secondes informations de position reçues et des premières informations de position acquises ;
et
le premier moyen de communication sans fil est configuré pour transmettre les informations d'authentification au dispositif d'authentification sans fil quand la distance représentée par les informations de distance est égale ou inférieure au seuil.

5. Système de traitement d'informations selon la revendication 1 ou 2, le système de traitement d'informations comprenant en outre un dispositif serveur (251) connecté au dispositif sans fil mobile et au dispositif d'authentification sans fil par l'intermédiaire d'un réseau de communication, dans lequel :
le dispositif sans fil mobile comporte le premier moyen d'acquisition d'informations de position (44) ;
le dispositif d'authentification sans fil comporte le second moyen d'acquisition d'informations de position (22) ;
le dispositif serveur comporte le moyen d'acquisition de distance (271) ;
le premier moyen de communication sans fil est configuré pour transmettre les premières informations de position au dispositif serveur ;
le second moyen de communication sans fil est configuré pour transmettre les secondes informations de position au dispositif serveur ;
le dispositif serveur est configuré pour recevoir les premières informations de position et les secondes informations de position ;
le moyen d'acquisition de distance est configuré pour acquérir les informations de distance en fonction des premières informations de position reçues et des secondes informations de position reçues ;
le dispositif serveur est configuré pour, quand la distance représentée par les informations de distance est égale ou inférieure au seuil, transmettre une instruction de lancement d'authentification qui est une instruction servant à lancer l'authentification, au dispositif d'authentification sans fil ; et
le moyen d'authentification (33) est configuré pour exécuter l'authentification quand l'instruction de lancement d'authentification est reçue par le second moyen de communication sans fil.

6. Procédé de traitement d'informations par un système de traitement d'informations ; le système de traitement d'informations comprenant : un dispositif sans fil mobile porté par un utilisateur et comportant un premier moyen de communication sans fil ; et un dispositif d'authentification sans fil comportant un second moyen de communication sans fil et un moyen d'authentification pour exécuter une authentification servant à déterminer que le dispositif sans fil mobile est ou non associé au dispositif d'authentification sans fil,
le procédé de traitement d'informations comprenant :
la transmission, au dispositif sans fil mobile, d'une requête d'informations d'authentification représentant une requête demandant des informations d'authentification pour déterminer que le dispositif sans fil mobile et le dispositif d'authentification sans fil sont ou non associés l'un à l'autre, par le second moyen de communication sans fil ;
la réception de la requête d'informations d'authentification, et la transmission des informations d'authentification au dispositif d'authentification sans fil, par le premier moyen de communication sans fil ;
la réception des informations d'authentification, par le second moyen de communication sans fil ;
l'acquisition périodique d'informations de distance représentant une distance entre le dispositif sans fil mobile et le dispositif d'authentification sans fil ;
quand la distance représentée par les informations de distance acquises est égale ou inférieure à un seuil prédéfini, l'exécution d'une authentification servant à déterminer que le dispositif sans fil mobile est associé ou non au dispositif d'authentification sans fil, en fonction des informations d'authentification reçues ; et
la commande du déverrouillage d'une porte d'un objet à utiliser par l'utilisateur quand il est déterminé à l'authentification que le dispositif sans fil mobile est associé au dispositif d'authentification sans fil, dans lequel :
l'étape de commande, après que la porte de l'objet est déverrouillée à l'étape de déverrouillage, verrouille la porte de l'objet si la distance représentée par les informations de distance dépasse le seuil pendant que l'objet est utilisé.

7. Dispositif de traitement d'informations comprenant :
un moyen de communication sans fil pour transmettre, à un dispositif sans fil mobile porté par un utilisateur, une requête d'informations d'authentification représentant une requête demandant des informations d'authentification pour déterminer que le dispositif sans fil mobile est associé ou non au dispositif d'authentification sans fil, et recevoir des informations d'authentification transmises par le dispositif sans fil mobile ;
un moyen d'acquisition de distance pour acquérir des informations de distance représentant une distance entre le dispositif sans fil mobile et le dispositif d'authentification sans fil ; et
un moyen d'authentification pour, quand la distance représentée par les informations de distance acquises est égale ou inférieure à un seuil prédéfini, exécuter une authentification servant à déterminer que le dispositif sans fil mobile est associé ou non au dispositif d'authentification sans fil, en fonction des informations d'authentification reçues ; et
comprenant en outre un moyen de commande de clé (31) pour déverrouiller une porte d'un objet à utiliser par l'utilisateur quand il est déterminé à l'authentification que le dispositif sans fil mobile est associé au dispositif d'authentification sans fil, dans lequel :
le moyen d'acquisition de distance est configuré pour acquérir périodiquement les informations de distance ; et
le moyen de commande de clé est configuré pour, après que la porte de l'objet est déverrouillée, verrouiller la porte de l'objet si la distance représentée par les informations de distance dépasse le seuil pendant que l'objet est utilisé.

8. Procédé de commande de dispositif d'authentification appliqué à un dispositif d'authentification exécutant une authentification servant à déterminer qu'un dispositif sans fil mobile porté par un utilisateur est associé ou non au dispositif d'authentification,
le procédé de commande de dispositif d'authentification comprenant :
la transmission, au dispositif sans fil mobile, d'une requête d'informations d'authentification représentant une requête demandant des informations d'authentification pour déterminer que le dispositif sans fil mobile est associé ou non au dispositif d'authentification sans fil, et la réception des informations d'authentification transmises par le dispositif sans fil mobile ;
l'acquisition périodique d'informations de distance représentant une distance entre le dispositif sans fil mobile et le dispositif d'authentification sans fil ;
quand la distance représentée par les informations de distance acquises est égale ou inférieure à un seuil prédéfini, exécuter l'authentification servant à déterminer que le dispositif sans fil mobile est associé ou non au dispositif d'authentification sans fil, en fonction des informations d'authentification reçues ; et
la commande du déverrouillage d'une porte d'un objet à utiliser par l'utilisateur quand il est déterminé à l'authentification que le dispositif sans fil mobile est associé au dispositif d'authentification sans fil, dans lequel :
l'étape de commande, après que la porte de l'objet est déverrouillée à l'étape de déverrouillage, verrouille la porte de l'objet si la distance représentée par les informations de distance dépasse le seuil pendant que l'objet est utilisé.

9. Programme informatique comprenant des instructions pour amener un dispositif d'authentification, qui exécute une authentification servant à déterminer qu'un dispositif sans fil mobile porté par un utilisateur est associé ou non au dispositif d'authentification, à fonctionner en tant que :
moyen de communication sans fil pour transmettre, au dispositif sans fil mobile, une requête d'informations d'authentification représentant une requête demandant des informations d'authentification pour déterminer que le dispositif sans fil mobile est associé ou non au dispositif d'authentification, et recevoir les informations d'authentification transmises par le dispositif sans fil mobile ;
moyen d'acquisition de distance pour acquérir des informations de distance représentant une distance entre le dispositif sans fil mobile et le dispositif d'authentification sans fil ; et
moyen d'authentification pour, quand la distance représentée par les informations de distance acquises est égale ou inférieure à un seuil prédéfini, exécuter l'authentification servant à déterminer que le dispositif sans fil mobile est associé ou non au dispositif d'authentification, en fonction des informations d'authentification reçues ; et
comprenant en outre un moyen de commande de clé (31) pour déverrouiller une porte d'un objet à utiliser par l'utilisateur quand il est déterminé à l'authentification que le dispositif sans fil mobile est associé au dispositif d'authentification sans fil, dans lequel :
le moyen d'acquisition de distance est configuré pour acquérir périodiquement les informations de distance ; et
le moyen de commande de clé est configuré pour, après que la porte de l'objet est déverrouillée, verrouiller la porte de l'objet si la distance représentée par les informations de distance dépasse le seuil pendant que l'objet est utilisé.
